# EUROPEAN PATENT APPLICATION

(11) **EP 4 663 016 A1**
(43) Date of publication of application: **17.12.2025**
(21) Application number: 25172100.7
(22) Date of filing: 24.04.2025
(51) Int. Cl.: A01M 7/00, B05B 9/08, B05B 12/00

(54) **KNAPSACK SPRAYER**

(30) Priority: 11.06.2024 CN 202410749693; 11.06.2024 CN 202410748637; 11.06.2024 CN 202421324021 U
(71) Applicant: Nanjing Chervon Industry Co., Ltd., Nanjing, Jiangsu 211106 (CN)
(72) Inventor: ZHU, Rui, Nanjing, Jiangsu 211106 (CN); LIU, Yangzi, Nanjing, Jiangsu 211106 (CN); OUYANG, Hengting, Nanjing, Jiangsu 211106 (CN); ZHOU, Zhen, Nanjing, Jiangsu 211106 (CN); SHI, Wei, Nanjing, Jiangsu 211106 (CN); MENG, Weishang, Nanjing, Jiangsu 211106 (CN); MU, Yuanbo, Nanjing, Jiangsu 211106 (CN)
(74) Representative: Sun, Yiming

(57) **Abstract**

A knapsack sprayer includes a liquid reservoir configured to store liquid; a nozzle configured to spray the liquid; an operating device connected to the liquid reservoir and the nozzle and configured to be held by a user to control the spraying direction of the nozzle; and a power unit powered by a battery pack and including an electric motor and a pump, where the electric motor drives the pump to draw the liquid from the liquid reservoir. The operating device is provided with a first operating member for allowing the electric motor to start or prohibiting the electric motor from starting, and the first operating member is configured to be operated by the user to adjust the rotational speed of the electric motor.

## Description

### TECHNICAL FIELD

The present application relates to the technical field of power tools, for example, a knapsack sprayer.

### BACKGROUND

A knapsack sprayer in the related art is usually used for spraying. The knapsack sprayer includes a motor and a pump. The motor drives the pump to suck liquid from the liquid source into the machine and pressurize the liquid. The pressurized liquid is further pumped to the nozzle and dispersed into small droplets to be sprayed out, thereby achieving spraying. The knapsack sprayer is usually used in scenarios such as agricultural irrigation and garden plant cultivation, where the user carries the water source to irrigate plants, moisturize the plants, and spray pesticides. The user usually needs to adjust the spray flow rate of the knapsack sprayer according to the usage scenario, and when the user starts and stops using the knapsack sprayer, jamming or liquid leakage may occur, making the knapsack sprayer inconvenient to use. Secondly, the user usually needs to spray different types of liquids according to the usage scenarios, such as clean water, liquid medicines, and fertilizer liquid. Different liquids have different viscosities. More viscous liquids require greater spray pressure to achieve the ideal spray distance. In some cases, the user needs to spray the plants that are at high places or in the distance or knock dust or insects off the plants by spraying.

This part provides background information related to the present application, and the background information is not necessarily the existing art.

### SUMMARY

A knapsack sprayer includes a liquid reservoir configured to store liquid; a nozzle configured to spray the liquid; an operating device connected to the liquid reservoir and the nozzle and configured to be held by a user to control the spraying direction of the nozzle; and a power unit powered by a battery pack and including an electric motor and a pump, where the electric motor drives the pump to draw the liquid from the liquid reservoir. The operating device is provided with a first operating member for allowing the electric motor to start or prohibiting the electric motor from starting, and the first operating member is configured to be operated by the user to adjust the rotational speed of the electric motor.

In some examples, a control device is further included, the operating device is further provided with a second operating member, and the control device is configured to start the electric motor when both the first operating member and the second operating member allow the electric motor to start and control the rotational speed of the electric motor based on the setting of the first operating member.

In some examples, the first operating member is disposed at an end of the operating device facing away from the liquid reservoir.

In some examples, the first operating member is configured to be a knob operated by the user to rotate about a first axis.

In some examples, the control device includes a circuit board assembly disposed on a side of the pump facing the battery pack.

In some examples, the knapsack sprayer further includes a valve, where the valve is in fluid communication with the pump and has a closed state in which the liquid is prevented from passing through the valve and an open state in which the liquid is allowed to pass through the valve; and the second operating member is configured to be operated by the user to switch from a state in which the electric motor is prohibited from starting to a state in which the electric motor is allowed to start and then be operated by the user to switch the valve from the closed state to the open state.

In some examples, the knapsack sprayer further includes a switch, where the second operating member pivots about a first pivot axis along a first pivot direction to trigger the switch, and when the switch is triggered, the second operating member allows the electric motor to start.

In some examples, the distance between the valve and the first pivot axis is less than the distance between the switch and the first pivot axis.

In some examples, the knapsack sprayer further includes a rod, where the rod is driven by the second operating member to pivot about a second pivot axis along a second pivot direction to trigger the switch, where the second pivot direction is opposite to the first pivot direction.

In some examples, the second operating member is of a push type.

In some examples, the voltage of the battery pack is greater than or equal to 36 V.

In some examples, the electric motor is a brushless motor.

In some examples, the brushless motor drives the pump to draw the liquid from the liquid reservoir and send the liquid to the nozzle for spraying, and the maximum spray distance of the nozzle is greater than or equal to 6 m.

In some examples, the pump includes a water inlet and a water outlet, and the maximum pressure that the water outlet can withstand is greater than or equal to 120 Psi.

In some examples, the pump is a plunger pump.

A knapsack sprayer includes a liquid reservoir configured to store liquid; a nozzle configured to spray the liquid; an operating device connected to the liquid reservoir and the nozzle and configured to be held by a user to control the spraying direction of the nozzle; a power unit powered by a battery pack and including an electric motor and a pump; and a control device for outputting a control signal to control the electric motor to drive the pump to draw the liquid from the liquid reservoir. The operating device is provided with a first operating member and a second operating member that are configured to be operated by the user, the first operating member is configured to adjust the rotational speed of the electric motor, and the control device is configured to control the electric motor to start when the first operating member and the second operating member satisfy a preset condition.

A knapsack sprayer includes a liquid reservoir configured to store liquid; a nozzle configured to spray the liquid; an operating device connected to the liquid reservoir and the nozzle and configured to be held by a user to control the spraying direction of the nozzle; and a power unit powered by a battery pack and including an electric motor and a pump, where the electric motor drives the pump to draw the liquid from the liquid reservoir to the nozzle for spraying. The operating device is provided with a first operating member for allowing the electric motor to start or prohibiting the electric motor from starting, and the first operating member is configured to be operated by the user to adjust the flow rate of the nozzle.

In some examples, the pump includes a water inlet and a water outlet, the maximum pressure that the water outlet can withstand is greater than or equal to 150 Psi, and the power of the electric motor is greater than or equal to 100 W.

In some examples, the pump is a plunger pump, the plunger pump includes a one-way water inlet valve, plungers, and a swashplate, the liquid is configured to flow through the one-way water inlet valve, and the swashplate rotates to drive the plunger to reciprocate to pressurize the liquid that passes through the one-way water inlet valve.

In some examples, the overall length of the pump is greater than or equal to 100 mm and less than or equal to 150 mm.

A knapsack sprayer includes a liquid reservoir configured to store liquid; a nozzle configured to spray the liquid; an operating device connected to the liquid reservoir and the nozzle and configured to be held by a user to control the spraying direction of the nozzle; a power unit powered by a battery pack and including an electric motor and a pump; and a valve in fluid communication with the pump and having a closed state in which the liquid is prevented from passing through the valve and an open state in which the liquid is allowed to pass through the valve. The knapsack sprayer further includes an operating member configured to be operated by the user to switch from a state in which the electric motor is prohibited from starting to a state in which the electric motor is allowed to start and then be operated by the user to switch the valve from the closed state to the open state.

In some examples, a switch is further included, where the operating member pivots about a first pivot axis along a first pivot direction to trigger the switch, and when the switch is triggered, the operating member allows the electric motor to start.

In some examples, the distance between the valve and the first pivot axis is less than the distance between the switch and the first pivot axis.

In some examples, a knob is further included, and the electric motor is started when the operating member and the knob satisfy a preset condition.

In some examples, the knob and the operating member are disposed on the operating device.

In some examples, the knob allows the electric motor to start or prohibits the electric motor from starting, and the knob is configured to be operated by the user to adjust the rotational speed of the electric motor.

In some examples, a control device is further included. After the operating member allows the electric motor to start and the valve is in the closed state, the operating member is in a pre-triggered state; after the operating member allows the electric motor to start and the valve is in the open state, the operating member is in a triggered state; and in the triggered state, the control device controls the electric motor to start.

In some examples, a locking member mating with the operating member is further included, and the locking member is operated to keep the operating member in the triggered state.

In some examples, the voltage of the battery pack is greater than or equal to 36 V.

In some examples, a rod is further included, where the rod is driven by the operating member to pivot about a second pivot axis along a second pivot direction to trigger the switch, where the second pivot direction is opposite to the first pivot direction.

A knapsack sprayer includes a liquid reservoir configured to store liquid; a nozzle configured to spray the liquid; an operating device connected to the liquid reservoir and the nozzle and configured to be held by a user to control the spraying direction of the nozzle; and a power unit powered by a battery pack and including an electric motor and a pump, where the electric motor drives the pump to draw the liquid from the liquid reservoir, the pump includes a water inlet and a water outlet, and the maximum pressure that the water outlet can withstand is greater than or equal to 120 Psi.

In some examples, the maximum pressure that the water outlet can withstand is greater than or equal to 150 Psi.

In some examples, the power of the electric motor is greater than or equal to 60 W and less than or equal to 200 W.

In some examples, the power of the electric motor is greater than or equal to 100 W.

In some examples, the pump is a plunger pump.

In some examples, the plunger pump includes a one-way water inlet valve, plungers, and a swashplate, the liquid is configured to flow through the one-way water inlet valve, and the swashplate rotates to drive the plunger to reciprocate to pressurize the liquid that passes through the one-way water inlet valve.

In some examples, the overall length of the pump is greater than or equal to 100 mm and less than or equal to 150 mm.

In some examples, the voltage of the battery pack is greater than or equal to 36 V.

In some examples, the material of the pump includes a corrosion-resistant material.

A knapsack sprayer includes a liquid reservoir configured to store liquid; a nozzle configured to spray the liquid; an operating device connected to the liquid reservoir and the nozzle and configured to be held by a user to control the spraying direction of the nozzle; and a power unit powered by a battery pack and including a brushless motor and a pump, where the brushless motor drives the pump to draw the liquid from the liquid reservoir and send the liquid to the nozzle for spraying, and the maximum spray distance of the nozzle is greater than or equal to 6 m.

### BRIEF DESCRIPTION OF THE DRAWINGS

FIG. 1 is a front view of a knapsack sprayer of the present application.
FIG. 2 is a rear view of the knapsack sprayer in FIG. 1.
FIG. 3 is a side view of the knapsack sprayer in FIG. 1 with a handle removed.
FIG. 4 is a sectional view of the knapsack sprayer in FIG. 3 taken along line x1.
FIG. 5 is a perspective view of the knapsack sprayer in FIG. 1 with a coupling portion exposed.
FIG. 6 is a perspective view of part of a housing and a power unit of the knapsack sprayer in FIG. 1.
FIG. 7 is a side view of a power unit of the knapsack sprayer in FIG. 1.
FIG. 8 is a top view of an operating device of the knapsack sprayer in FIG. 1.
FIG. 9 is a sectional view of the operating device in FIG. 8 taken along line x2.
FIG. 10 is a perspective view of a second operating member of the knapsack sprayer in FIG. 1 from one perspective.
FIG. 11 is a perspective view of a second operating member of the knapsack sprayer in FIG. 1 from another perspective.
FIG. 12 is a side view of an operating device of the knapsack sprayer in FIG. 1 in an initial state with part of a housing removed.
FIG. 13 is a side view of the operating device in FIG. 12 in a pre-triggered state with part of the housing removed.
FIG. 14 is a side view of the operating device in FIG. 12 in a triggered state with part of the housing removed.
FIG. 15 is a rear view of a power unit of the knapsack sprayer in FIG. 1.
FIG. 16 is a sectional view of the power unit in FIG. 15.
FIG. 17 is a plan view of a second operating member and a locking member of the knapsack sprayer in FIG. 1 according to another example.
FIG. 18 is a plan view of an operating device of the knapsack sprayer in FIG. 1 according to another example.

### DETAILED DESCRIPTION

Before any examples of this application are explained in detail, it is to be understood that this application is not limited to its application to the structural details and the arrangement of components set forth in the following description or illustrated in the above drawings.

In this application, the terms "comprising", "including", "having" or any other variation thereof are intended to cover an inclusive inclusion such that a process, method, article or device comprising a series of elements includes not only those series of elements, but also other elements not expressly listed, or elements inherent in the process, method, article, or device. Without further limitations, an element defined by the phrase "comprising a ..." does not preclude the presence of additional identical elements in the process, method, article, or device comprising that element.

In this application, the term "and/or" is a kind of association relationship describing the relationship between associated objects, which means that there can be three kinds of relationships. For example, A and/or B can indicate that A exists alone, A and B exist simultaneously, and B exists alone. In addition, the character "/" in this application generally indicates that the contextual associated objects belong to an "and/or" relationship.

In this application, the terms "connection", "combination", "coupling" and "installation" may be direct connection, combination, coupling or installation, and may also be indirect connection, combination, coupling or installation. Among them, for example, direct connection means that two members or assemblies are connected together without intermediaries, and indirect connection means that two members or assemblies are respectively connected with at least one intermediate members and the two members or assemblies are connected by the at least one intermediate members. In addition, "connection" and "coupling" are not limited to physical or mechanical connections or couplings, and may include electrical connections or couplings.

In this application, it is to be understood by those skilled in the art that a relative term (such as "about", "approximately", and "substantially") used in conjunction with quantity or condition includes a stated value and has a meaning dictated by the context. For example, the relative term includes at least a degree of error associated with the measurement of a particular value, a tolerance caused by manufacturing, assembly, and use associated with the particular value, and the like. Such relative term should also be considered as disclosing the range defined by the absolute values of the two endpoints. The relative term may refer to plus or minus of a certain percentage (such as 1%, 5%, 10%, or more) of an indicated value. A value that did not use the relative term should also be disclosed as a particular value with a tolerance. In addition, "substantially" when expressing a relative angular position relationship (for example, substantially parallel, substantially perpendicular), may refer to adding or subtracting a certain degree (such as 1 degree, 5 degrees, 10 degrees or more) to the indicated angle.

In this application, those skilled in the art will understand that a function performed by an assembly may be performed by one assembly, multiple assemblies, one member, or multiple members. Likewise, a function performed by a member may be performed by one member, an assembly, or a combination of members.

In this application, the terms "up", "down", "left", "right", "front", and "rear" " and other directional words are described based on the orientation or positional relationship shown in the drawings, and should not be understood as limitations to the examples of this application. In addition, in this context, it also needs to be understood that when it is mentioned that an element is connected "above" or "under" another element, it can not only be directly connected "above" or "under" the other element, but can also be indirectly connected "above" or "under" the other element through an intermediate element. It should also be understood that orientation words such as upper side, lower side, left side, right side, front side, and rear side do not only represent perfect orientations, but can also be understood as lateral orientations. For example, lower side may include directly below, bottom left, bottom right, front bottom, and rear bottom.

In this application, the terms "controller", "processor", "central processor", "CPU" and "MCU" are interchangeable. Where a unit "controller", "processor", "central processing", "CPU", or "MCU" is used to perform a specific function, the specific function may be implemented by a single aforementioned unit or a plurality of the aforementioned unit.

In this application, the term "device", "module" or "unit" may be implemented in the form of hardware or software to achieve specific functions.

In this application, the terms "computing", "judging", "controlling", "determining", "recognizing" and the like refer to the operations and processes of a computer system or similar electronic computing device (e.g., controller, processor, etc.).

Technical solutions of the present application are further described below in conjunction with drawings and examples.

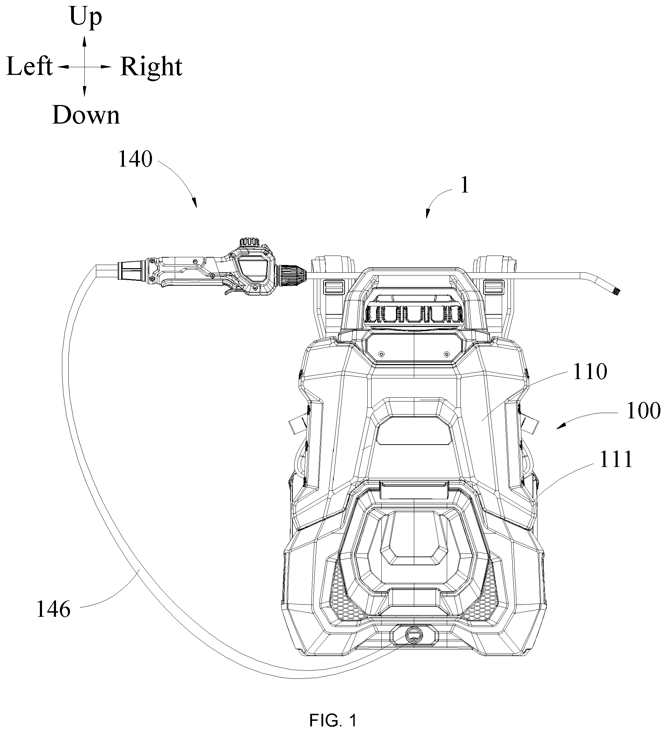

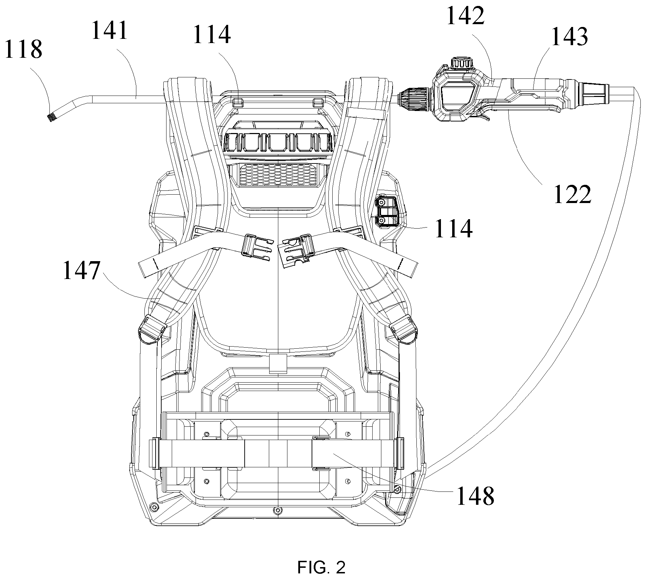

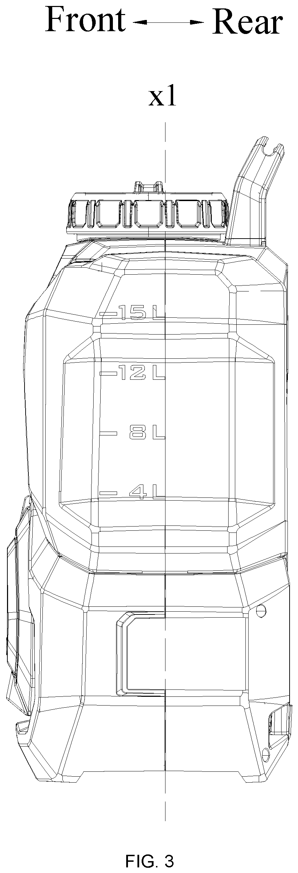

As shown in FIGS. 1 to 4, a knapsack sprayer 1 includes a body 100, a handle 140, a water pipe 146, and shoulder straps 147. The body 100 is connected with the shoulder straps 147 through which the user can carry the body 100 on the back. The body 100 includes a liquid reservoir 110. The liquid reservoir 110 is configured to store liquid. The liquid reservoir 110 is basically isolated from other devices in the body 100 to prevent liquid leakage. In some examples, the liquid reservoir 110 includes a waterproof assembly for further water resistance. The body 100 includes a housing 111. In this example, the housing 111 is formed with the liquid reservoir 110. In some examples, the liquid reservoir 110 may be a separate device disposed in the housing 111. The liquid reservoir 110 includes an accommodation cavity 112 and a water filling port 113. The user injects liquid into the accommodation cavity 112 from the water filling port 113. In this manner, when using the knapsack sprayer 1, the user can move while carrying the liquid stored in the accommodation cavity 112, that is, the user can move while carrying the water source required for spraying so that the knapsack sprayer 1 is portable. The volume of the liquid reservoir 110 is greater than or equal to 15 L and less than or equal to 25 L. In some examples, the volume of the liquid reservoir 110 is greater than or equal to 10 L and less than or equal to 20 L. In some examples, the volume of the liquid reservoir 110 is greater than or equal to 20 L and less than or equal to 30 L.

The handle 140 is connected to the body 100 through the flexible water pipe 146 so that the handle 140 is movable relative to the body 100. In some examples, a storage portion 114 is disposed on the body 100 and used for the user to store the handle 140. In this example, multiple storage portions 114 may be provided. The handle 140 may be stored at multiple positions for easy use. In some examples, the shoulder straps 147 include a waist strap 148 that includes a slot 149 for the user to store the handle 140. In some examples, a sunshade may be mounted on the body 100 to shield the user from the sunlight. The sunshade may be mounted to the body 100 through the storage portion 114 for storing the handle 140.

The handle 140 includes a nozzle 141 and an operating device 142. The nozzle 141 connects with the liquid reservoir 110 to spray the liquid. The nozzle 141 includes a water spray hole 118. The liquid is sprayed from the water spray hole 118 onto the plants. The nozzle 141 may be long or short. In this example, the nozzle 141 is a long nozzle, and the long nozzle allows the liquid to flow in the nozzle 141 for a period before spraying out so that it is convenient for the nozzle 141 to reach into the dense plants for spraying. The nozzle 141 may further be equipped with nozzle heads of different types. In some examples, after the attachment is mounted or not, the nozzle 141 may be adjusted by the user to change the size or shape of the water spray hole 118 or the number of exposed water spray openings. The specific structure of the nozzle 141 is not limited here.

The operating device 142 is connected to the liquid reservoir 110 and the nozzle 141. The operating device 142 includes a grip 143 configured to be held by the user. When using the knapsack sprayer 1, the user carries the body 100 on the back, holds the operating device 142 with the hand, and then moves the arm to control the spraying direction of the nozzle 141. The body 100, the water pipe 146, the operating device 142, and the nozzle 141 are connected in sequence. The operating device 142 connects the water pipe 146 to the nozzle 141.

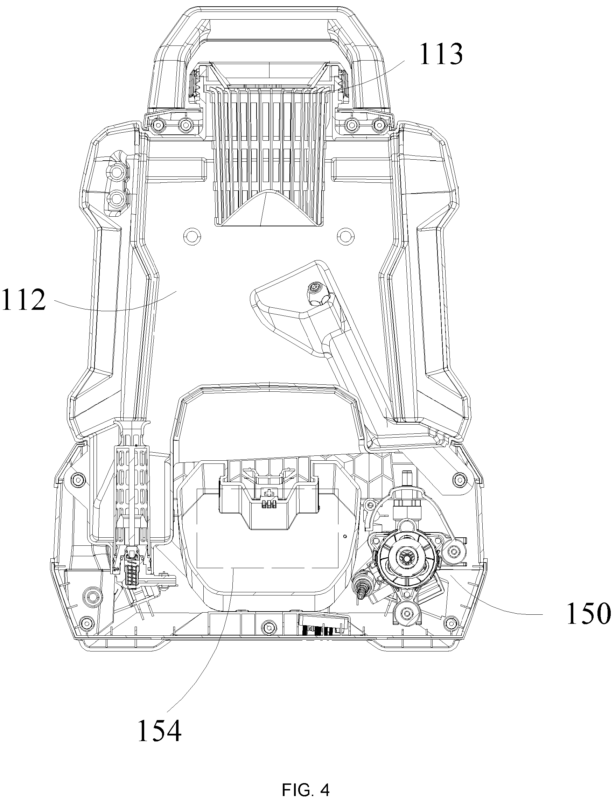

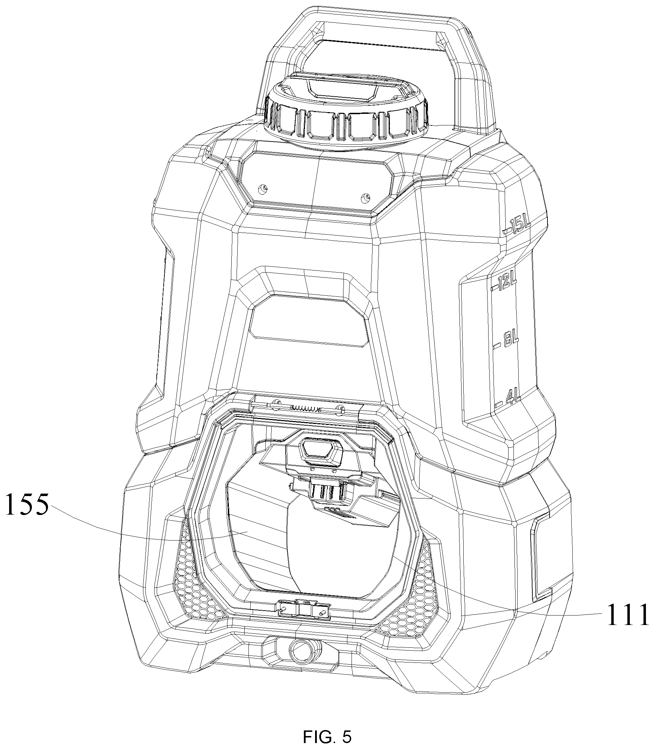

As shown in FIGS. 4 and 5, the knapsack sprayer 1 further includes a power unit 150 and a coupling portion 155. The power unit 150 is powered by a battery pack 154. The battery pack 154 is detachably mounted to the coupling portion 155. In this manner, after the battery pack 154 runs out of power, the user removes the battery pack 154 from the coupling portion 155 and charges the battery pack 154, thereby repeatedly using the battery pack 154 to supply power to the power unit 150. The user does not need to use a fixed alternating current power cord, so the knapsack sprayer 1 is convenient to use and has good portability. In this example, the coupling portion 155 is at least partially disposed below the liquid reservoir 110. The coupling portion 155 includes a baffle. The user rotates the baffle to expose the coupling portion 155 and then inserts or removes the battery pack 154. In some examples, the coupling portion 155 may also be located at other positions on the body 100. The voltage of the battery pack 154 is greater than or equal to 36 V. In this manner, the knapsack sprayer 1 has a long battery life, has strong power, and is convenient to use.

As shown in FIGS. 5 to 7, the body 100 includes an accommodation portion 115. The power unit 150 is disposed in the accommodation portion 115. The power unit 150 includes an electric motor 151 and a pump 170. The pump 170 is in fluid communication with the liquid reservoir 110. The electric motor 151 drives the pump 170 to draw the liquid from the liquid reservoir 110. The pump 170 is in fluid communication with the water pipe 146. After drawing out the liquid in the liquid reservoir 110, the pump 170 sends the liquid to the operating device 142 and the nozzle 141 in sequence through the water pipe 146 so that the liquid is sprayed out. In this example, the accommodation portion 115 is at least partially located below the liquid reservoir 110. The coupling portion 155 is located at the center of the accommodation portion 115 and divides the accommodation portion 115 into a left part and a right part. The coupling portion 155 is basically separated from the accommodation portion 115 by the housing 111 to prevent dust from falling into the accommodation portion 115. The electric motor 151 is a brushless motor so that the knapsack sprayer 1 has strong power and high working efficiency.

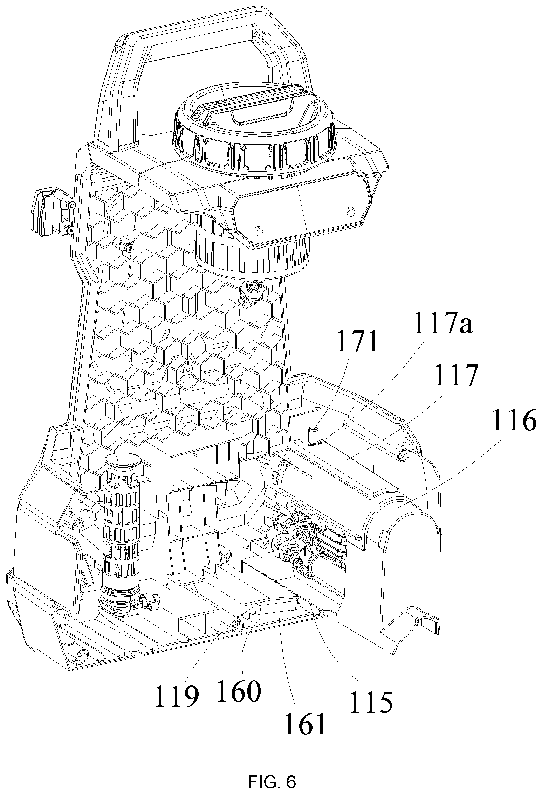

As shown in FIGS. 6, 8, and 9, the knapsack sprayer 1 includes a first operating member 120. The first operating member 120 is disposed on the operating device 142. The user operates the first operating member 120 to allow the electric motor 151 to start or prohibit the electric motor 151 from starting. The first operating member 120 is further configured to be operated by the user to adjust the rotational speed of the electric motor 151. The first operating member 120 is disposed on the operating device 142 so that the user can easily and conveniently operate the first operating member 120 to allow the electric motor 151 to start and adjust the rotational speed of the electric motor 151. In an actual usage scenario, while holding the operating device 142, the user may operate the first operating member 120 to allow the electric motor 151 to start and adjust the rotational speed of the electric motor 151. Allowing the electric motor 151 to start is a necessary process for the user to use the knapsack sprayer 1. According to the usage habits, the user may hold the operating device 142 and then use the first operating member 120 to allow the electric motor 151 to start. During this period, the user's hand may or may not leave the operating device 142 so that the knapsack sprayer 1 is convenient to use.

The rotational speed of the electric motor 151 is adjusted, that is, the flow rate of the nozzle 141 is adjusted. When the user switches the sprayed liquid, for example, switches from spraying clean water to spraying pesticides, the user can easily and conveniently adjust the rotational speed of the electric motor 151 by operating the first operating member 120, thereby adjusting the flow rate of the nozzle 141. In this manner, the user can achieve different spray effects by operating the first operating member 120 according to different usage scenarios. For example, the user can adjust the spraying range, the spray distance, and the like. During the spraying process, the user may directly operate the first operating member 120 without taking the hand off the operating device 142 and without stopping the ongoing work so that the working efficiency is high and the knapsack sprayer 1 is convenient to use.

The operating device 142 is basically cylindrical, and the length of the operating device 142 is basically consistent with the length of the user's hand. In this example, the operating device 142 is slightly longer than the user's hand. The first operating member 120 is disposed at an end of the operating device 142 facing away from the liquid reservoir 110. That is to say, when the user holds the operating device 142 by hand, the first operating member 120 is closer to the user's fingers than to the user's elbow. In this manner, the user can hold the operating device 142 with the palm and several fingers and operate the first operating member 120 with the other several fingers. The operating functions of the first operating member 120 include allowing the electric motor 151 to start and adjusting the rotational speed of the electric motor 151. The first operating member 120 may be operated by the user to multiple gears. In this example, the first operating member 120 is a knob. The user operates the knob to rotate about a first axis 101 to allow the electric motor 151 to start and adjust the rotational speed of the electric motor 151. The operating device 142 includes a first elastic member 120b. The first elastic member 120b is fixed in the operating device 142. The first operating member 120 is connected to a prism 120a. The prism 120a moves along with the first operating member 120 and abuts against the first elastic member 120b. In this manner, when the first operating member 120 moves to different gears, the first elastic member 120b abuts against different surfaces of the prism 120a and generates a feedback force, thereby playing a prompting role and making the operation more convenient for the user.

The first operating member 120 may move to multiple gears, including the off gear, the on gear, the first speed gear, the second speed gear, the third speed gear, and the fourth speed gear. When the first operating member 120 is operated to the off gear, the first operating member 120 prevents the electric motor 151 from starting. When the first operating member 120 is operated to the on gear, the first operating member 120 allows the electric motor 151 to start. The on gear is also referred to as an initial speed gear. In this manner, when the first operating member 120 is operated to the on gear, the electric motor 151 can rotate at the initial speed. When the first operating member 120 is operated to the first speed gear, the second speed gear, the third speed gear, or the fourth speed gear, the electric motor 151 can rotate at the first speed, the second speed, the third speed, or the fourth speed, respectively. In some examples, the first operating member 120 may include fewer or more gears. In some examples, the first operating member 120 may be a button, a toggle button, a trigger rod, or an operating member in another form, which is not limited herein.

The knapsack sprayer 1 further includes a control device 160. The control device 160 outputs a control signal to control the electric motor 151 to drive the pump 170 to operate.

The first operating member 120 is connected to an electronic signal transmitter 162. When the user operates the first operating member 120 to different positions, the electronic signal transmitter 162 senses the positions of the first operating member 120 to detect the gears of the first operating member 120 and sends different position signals to the control device 160 according to the gears of the first operating member 120. The control device 160 adjusts the rotational speed of the electric motor 151 according to the gear of the first operating member 120.

The knapsack sprayer 1 includes a display device 133. The display device 133 displays the gear of the first operating member 120. In this manner, the user can clearly know the gear of the first operating member 120. The indicative content of the display device 133 changes with the operation of the user so that the user can know the position of the first operating member 120 in real time, that is, the user can know the rotational speed of the electric motor 151 in real time, and the first operating member 120 is convenient and quick to use. The display device 133 is integrated on the first operating member 120. In this manner, the display device 133 is located near the user's hand so that the display device 133 is convenient for the user to observe. Moreover, the operating device 142 has a compact structure. In this example, the display device 133 includes a light-emitting diode (LED) lamp. When the first operating member 120 is in different gears, the display device 133 has different illuminated positions. Numbers and letters are engraved on the surface of the first operating member 120. Different illuminated positions correspond to different numbers and letters to indicate the gear of the first operating member 120 to the user. In some examples, when the first operating member 120 is in different gears, the display device 133 has different brightnesses or colors. The indication form of the display device 133 is not limited herein. In some examples, the display device 133 is a sticker marked with gear marks. The operating device 142 is provided with indication marks, such as scale lines. When the first operating member 120 rotates, different gear marks on the display device 133 are aligned with the indication marks on the operating device 142, respectively, thereby playing the role of indicating the gears. In some examples, marks such as scale lines are formed on the display device 133. The specific structure and form of the display device 133 are not limited here, as long as the display device 133 can display information.

The knapsack sprayer 1 further includes a second operating member 122. The user operates the second operating member 122 to allow the electric motor 151 to start or prohibit the electric motor 151 from starting. The knapsack sprayer 1 further includes a valve 137. The valve 137 is in fluid communication with the pump 170. When the valve 137 is in fluid communication with the pump 170, water in the liquid reservoir 110 flows to the valve 137. The valve 137 has a closed state in which the liquid is prevented from passing through the valve 137 and an open state in which the liquid is allowed to pass through the valve 137. The user operates the second operating member 122 to switch the valve 137 between the closed state and the open state. In this example, the valve 137 is a mechanical valve 137. In some examples, the valve 137 is a one-way valve 137.

The control device 160 controls the electric motor 151 to start according to whether the first operating member 120 and the second operating member 122 satisfy a preset condition. The electric motor 151 is started when the trigger and the knob satisfy a preset condition. The control device 160 includes a circuit board assembly 161 disposed on a side of the pump 170 facing the battery pack 154. A chamber 119 is formed on the base plate of the housing 111. The circuit board assembly 161 is disposed in the chamber 119 and is connected to the to-be-controlled device via wires.

The first operating member 120 and the second operating member 122 each have a triggered state. In the triggered state, the first operating member 120 allows the electric motor 151 to start. In the triggered state, the second operating member 122 allows the electric motor 151 to start. When both the first operating member 120 and the second operating member 122 allow the electric motor 151 to start, that is, when both the first operating member 120 and the second operating member 122 are in the triggered state, the control device 160 starts the electric motor 151 and controls the rotational speed of the electric motor 151 based on the setting of the first operating member 120. That is to say, only when the user operates the first operating member 120 and the second operating member 122 and makes both the first operating member 120 and the second operating member 122 in the triggered state, that is, only when both the first operating member 120 and the second operating member 122 allow the electric motor 151 to start, can the control device 160 control the electric motor 151 to start and can the user use the knapsack sprayer 1 to work. In this manner, the knapsack sprayer 1 is safe and reliable to use.

The second operating member is disposed on the operating device 142. The user may operate the second operating member 122 while holding the operating device 142 so that the knapsack sprayer 1 is convenient to use. Both the first operating member 120 and the second operating member 122 are disposed on the operating device 142. In this manner, the operating members for controlling and safely starting the electric motor 151 are integrated on the operating device 142 so that the user can operate the first operating member 120 and the second operating member 122 while holding the operating device 142, and the operations of the first operating member 120 and the second operating member 122 can be performed with one hand. The operating device 142 has a compact structure and is easy to use.

The second operating member 122 is operated by the user to switch from a state in which the electric motor 151 is prohibited from starting to a state in which the electric motor 151 is allowed to start. Then, the second operating member 122 is operated by the user to switch the valve 137 from the closed state to the open state. The knapsack sprayer 1 further includes a second switch 121. The second switch 121 is mounted in the operating device 142. The second operating member is operated by the user to trigger the second switch 121. The second switch 121 has two states: an "on" state and an "off" state. If the second switch 121 is not triggered, the second switch 121 is in the "off" state. If the second switch 121 is triggered, the second switch 121 is switched to the "on" state. If the second switch 121 is triggered, the second operating member 122 allows the electric motor 151 to start. The second switch 121 may be a micro switch. In some examples, the second switch 121 may be of another type, such as a Hall switch. The second operating member 122 is of a push type. The user presses the second operating member 122 to change the position of the second operating member 122. The second operating member 122 pivots about a first pivot axis 102 along a first pivot direction a to trigger the second switch 121. When the second switch 121 is triggered, the second operating member 122 allows the electric motor 151 to start. The distance between the valve 137 and the first pivot axis 102 is less than the distance between the switch and the first pivot axis 102. The operating device 142 extends basically along a first straight line 11. In the extension direction of the first straight line 11, the valve 137 is closer to the first pivot axis 102, and the second switch 121 is farther from the first pivot axis 102. When the second operating member 122 rotates about the first pivot axis 102, the farther the part of the second operating member 122 is from the first pivot axis 102, the greater the movement amplitude of the part is. The second switch 121 is farther from the first pivot axis 102 so that the position of the second switch 121 corresponds to the position of the part of the second operating member with a greater movement amplitude. When the user operates the second operating member 122, the second switch 121 can respond to the movement of the second operating member 122 in a shorter period than the valve 137 which is closer to the first pivot axis 102. The valve 137 is closer to the first pivot axis 102 so that according to the principle of a lever 130, the user can stably control the opening and closing of the valve 137 with a relatively small force, and the operation is easy and labor-saving.

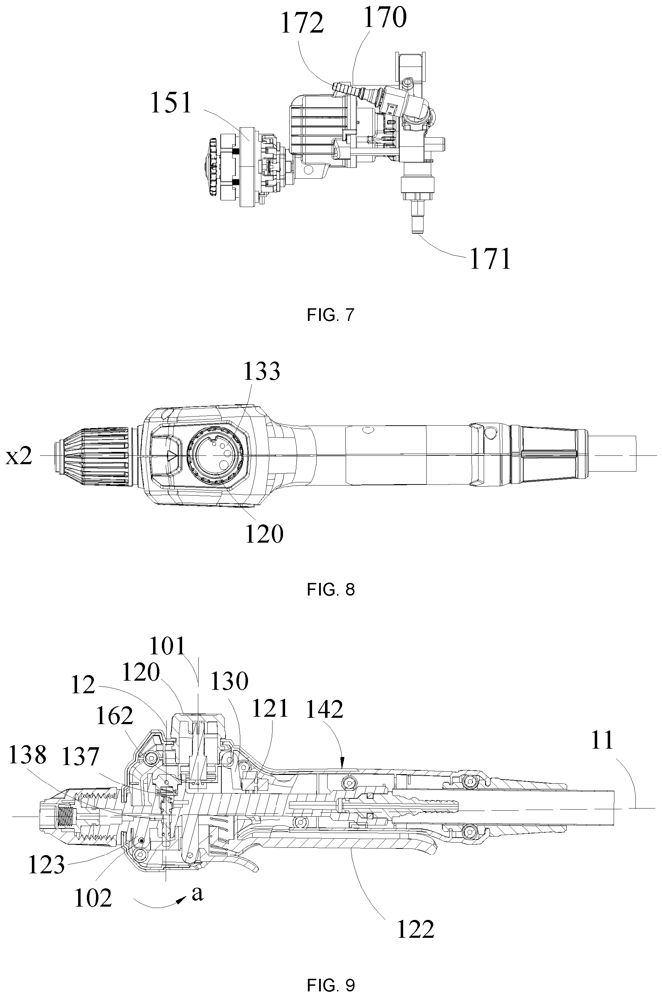

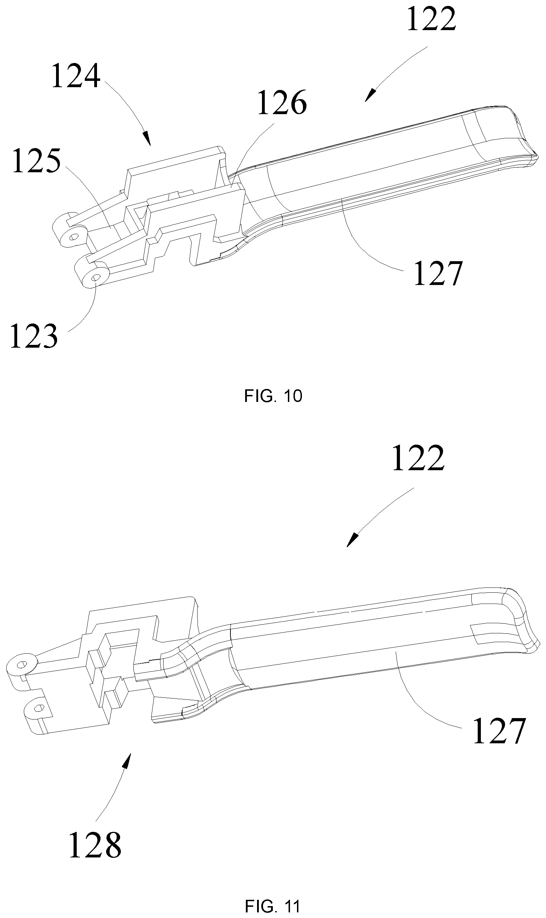

As shown in FIGS. 9 and 10, the second operating member 122 includes a first mounting portion 123, an abutting portion 124, and a pressing portion 127. The first mounting portion 123, the abutting portion 124, and the pressing portion 127 are arranged in sequence. The first mounting portion 123 is disposed around the first pivot axis 102. The pressing portion 127 is configured to be pressed by the user. The abutting portion 124 includes a first abutting portion 125 and a second abutting portion 126. The first abutting portion 125 drives the valve 137 to switch between the closed state and the open state, and the second abutting portion 126 drives the second switch 121 to switch between the "on" state and the "off" state.

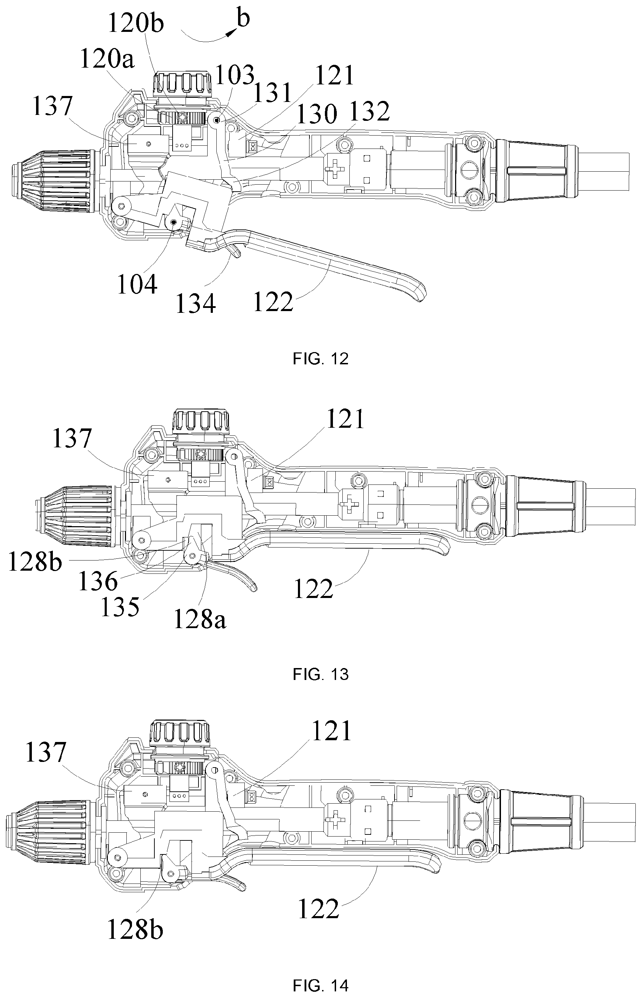

As shown in FIGS. 9 and 12, the knapsack sprayer 1 includes a rod 130. The second operating member 122 triggers the second switch 121 by driving the rod 130. The rod 130 is movably mounted in the operating device 142 and is disposed near the second switch 121. The rod 130 includes a second mounting portion 131 and a trigger portion 132. The rod 130 may pivot about a second pivot axis 103. The second mounting portion 131 is disposed around the second pivot axis 103. After the rod 130 is driven by the second operating member 122 and pivots about the second pivot axis 103 by a certain angle, the trigger portion 132 is in contact with the second switch 121 and triggers the second switch 121. The second operating member 122 pivots about the first pivot axis 102 along the first pivot direction a. The rod 130 pivots about the second pivot axis 103 along a second pivot direction b. The first pivot direction a is opposite to the second pivot direction b. In this manner, the second operating member 122 and the rod 130 do not interfere with each other during movement; and when the user operates the second operating member 122, the force loss is relatively small, and the user can easily operate the second operating member 122 to trigger the second switch 121.

The valve 137 includes a movable member 138. The movable member 138 moves along a second straight line 12 to switch the valve 137 between the open state and the closed state. The movable member 138 is used for isolating the liquid on two sides of the valve 137. The structure of the valve 137 is similar to that in the existing art, and the details are not repeated here. When the user operates the second operating member 122, the first abutting portion 125 may abut against the movable member 138 to drive the movable member 138 to move along the second straight line 12.

Since the second switch 121 is farther from the first pivot axis 102 than the valve 137, when the user operates the second operating member 122 to rotate, the second operating member 122 first triggers the second switch 121.

As shown in FIG. 12, when the second switch 121 is not triggered, the second operating member 122 prohibits the electric motor 151 from starting, and when the valve 137 is in the closed state, the second operating member 122 is in an initial state.

As shown in FIG. 13, when the second switch 121 is triggered, the second operating member 122 allows the electric motor 151 to start, and when the valve 137 is in the closed state, the second operating member 122 is in a pre-triggered state. In the pre-triggered state, although the electric motor 151 is started and the liquid in the liquid reservoir 110 can be driven by the pump 170 to flow toward the valve 137, the valve 137 has not yet been switched to the open state, and the liquid cannot be sprayed out through the valve 137.

As shown in FIG. 14, when the user continues operating the second operating member 122 to rotate, the valve 137 is driven by the second operating member 122 and switched to the open state. At this time, the second operating member 122 allows the electric motor 151 to start, and when the valve 137 is in the open state, the second operating member 122 is in a triggered state. In the triggered state, the control device 160 controls the electric motor 151 to start.

In this example, when the user operates the second operating member 122 to rotate about the first pivot axis 102 by 5 degrees, the second switch 121 is switched to the "on" state, and the second operating member 122 allows the electric motor 151 to start. At this time, the first abutting portion 125 has just come into contact with the movable member 138 but does not generate a driving force on the movable member 138. When the user operates the second operating member 122 to continue rotating, the movable member 138 moves, the valve 137 allows liquid to pass through, and the valve 137 is switched to the open state. When the second operating member 122 rotates about the first pivot axis 102 along the first pivot direction a by a total angle greater than or equal to 13 degrees and less than or equal to 15 degrees, the second operating member 122 abuts against the grip 143, and the grip 143 prevents the second operating member 122 from continuing rotating. At this time, the movement amplitude of the movable member 138 is the largest, and the flow rate of the sprayed liquid reaches the maximum value.

When the user operates the second operating member 122, during two strokes, the second operating member 122 starts the electric motor 151 and then opens the valve 137 so that the liquid can first flow toward the valve 137. Since the amount of rotation of the second operating member 122 is relatively small, the user operates the second operating member 122 to complete the two strokes at a faster speed. After the electric motor 151 is started, when the liquid just flows to the valve 137, the user just opens the valve 137 so that the liquid can be sprayed out smoothly. In this manner, the knapsack sprayer 1 has high startup efficiency and better usage smoothness. When the work is finished, the electric motor 151 stops operating so that the liquid does not continue to be delivered to the valve 137. Then, the valve 137 is closed when the liquid runs out so that it is not easy to leak liquid. In this manner, the knapsack sprayer 1 is convenient to use. In some examples, the control device 160 is configured to control the electric motor 151 to start when the valve 137 is switched from the closed state to the open state.

As shown in FIGS. 11 to 14, the knapsack sprayer 1 includes a locking member 134. The locking member 134 mates with the second operating member 122 to keep the second operating member 122 in the triggered state. The locking member 134 is pivotably mounted to the operating device 142 about a third pivot axis 104. The locking member 134 includes a first locking portion 135. The second operating member 122 includes a second locking portion 128. The first locking portion 135 is a protrusion 136 that protrudes toward the second locking portion 128. The second locking portion 128 is a recess having a first locking groove 128a and a second locking groove 128b.

The dimension of the first locking groove 128a is greater than the dimension of the protrusion 136. The dimension of the second locking groove 128b is basically the same as the dimension of the protrusion 136. When the second operating member 122 is in the initial state and the pre-triggered state, the protrusion 136 of the locking member 134 mates with the first locking groove 128a, and the locking member 134 does not play a role in locking the second operating member 122. When the second operating member 122 is in the triggered state, the user may operate the locking member 134 to rotate about the third pivot axis so that the protrusion 136 mates with the second locking groove 128b. The second locking groove 128b has an interference fit with the protrusion 136 so that the locking member locks the second operating member 122 in the triggered state. In this manner, the user does not need to keep pressing the second operating member 122 so that the operating device 142 is convenient and labor-saving to use.

As shown in FIGS. 6 and 7, the pump 170 includes a water inlet 171 and a water outlet 172. The liquid in the liquid reservoir 110 enters the pump 170 from the water inlet 171, is pressurized inside the pump 170, leaves the pump 170 through the water outlet 172, and enters the water pipe 146, the operating device 142, and the nozzle 141 in sequence before being sprayed out. The electric motor 151 and the pump 170 are accommodated in the accommodation portion 115. A fixing portion 116 is disposed in the accommodation portion 115. The fixing portion 116 is disposed basically below the liquid reservoir 110 and located between the coupling portion 155 and the housing 111 of the body 100 in the left and right direction. The fixing portion 116 fixes the pump 170 and the electric motor 151. In this example, the fixing portion 116 includes an outer housing 117 that basically surrounds the electric motor 151 and the pump 170. The electric motor 151 and the pump 170 are mounted in the outer housing 117 by fasteners such as screws. The outer housing 117 protects the electric motor 151 and the pump 170 from being squeezed by the liquid reservoir 110 and from liquid leakage and prevents dust from entering the outer housing 117. The outer housing 117 includes a hole 117a on the upper side of the outer housing 117. The water inlet 171 passes through the hole 117a and extends to the liquid reservoir 110 to be in fluid communication with the liquid reservoir 110.

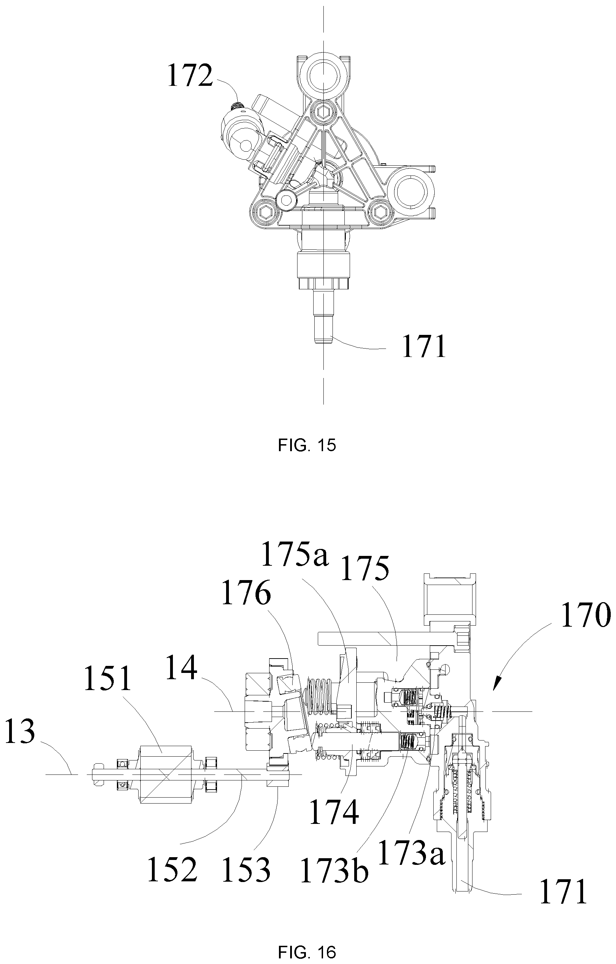

As shown in FIG. 7, 15, and 16, the electric motor 151 includes an output shaft 152 and an output gear 153. In this example, the pump 170 is a plunger pump. The plunger pump includes plungers 174, a pressurizing chamber 175, and a swashplate 176. After the electric motor 151 is started, the output shaft 152 rotates about a third straight line 13. The output gear 153 meshes with the swashplate 176 and drives the swashplate 176 to rotate about a fourth straight line 14. Multiple plungers 174 are provided and basically arranged along the circumferential direction of the fourth straight line 14. The fourth straight line 14 is parallel to the third straight line 13. The swashplate 176 abuts against an end of the plungers 174, and through an inclined surface, the rotating swashplate 176 drives the plungers 174 to reciprocate. The pressurizing chamber 175 is basically cylindrical. The pressurizing chamber 175 includes a pressurizing member 175a. The pressurizing member 175a forms a circular bottom surface of the pressurizing chamber 175. The plungers 174 are fixedly connected to the pressurizing member 175a and drive the pressurizing member 175a to reciprocate when reciprocating. The pressurizing chamber 175 is in fluid communication with the water inlet 171 and the water outlet 172. That is to say, the liquid in the liquid reservoir 110 temporarily stays in the pressurizing chamber 175 through the water inlet 171. After the liquid is pressurized in the pressurizing chamber 175, the liquid leaves the pressurizing chamber 175 from the water outlet 172. When the plungers 174 reciprocate, the internal volume of the pressurizing chamber 175 decreases or increases as the plungers 174 move. In this manner, the pressure in the pressurizing chamber 175 increases or decreases. The liquid at a low pressure enters the pressurizing chamber 175, is pressurized, leaves the pressurizing chamber 175 at a high pressure, is conveyed out of the pump 170, and enters the water pipe 146. The pump 170 includes a one-way water inlet valve 173a and a one-way water outlet valve 173b. The liquid enters the pressurizing chamber 175 through the one-way water inlet valve 173a. After the liquid passes the one-way water inlet valve 173a, the liquid is pressurized. The pressurized liquid is outputted from the pump 170 through the one-way water outlet valve 173b. In this manner, the flow and pressurization process of the liquid is guaranteed to be orderly and smooth. The plunger pump can spray fine droplets with a good spray effect.

The water outlet 172 connects the pressurizing chamber 175 to the water pipe 146. The liquid leaves the pump 170 from the water outlet 172 and enters the water pipe 146. The maximum pressure that the water outlet 172 can withstand is greater than or equal to 120 Psi. In some examples, the maximum pressure that the water outlet 172 can withstand is greater than or equal to 150 Psi. In some examples, the maximum pressure that the water outlet 172 can withstand is greater than or equal to 80 Psi and less than or equal to 1000 Psi. In some examples, the maximum pressure that the water outlet 172 can withstand is about 100 Psi, 120 Psi, 140 Psi, 160 Psi, 180 Psi, 200 Psi, 250 Psi, 300 Psi, 400 Psi, 500 Psi, 600 Psi, 700 Psi, 800 Psi, 900 Psi, or 1000 Psi. The maximum pressure that the water outlet 172 can withstand is relatively large so that the degree to which the liquid is pressurized can reach a relatively high level, and it is convenient for the knapsack sprayer 1 to spray relatively viscous liquids or achieve a relatively long spray distance, thereby satisfying various working conditions and ensuring convenient usage.

The power of the electric motor 151 is greater than or equal to 100 W. In some examples, the power of the electric motor 151 is greater than or equal to 60 W and less than or equal to 200 W. In some examples, the power of the electric motor 151 is greater than or equal to 80 W and less than or equal to 150 W. In some examples, the power of the electric motor 151 is greater than or equal to 100 W and less than or equal to 130 W. The power of the electric motor 151 is relatively large so that the power of the pump 170 is strong, the degree to which the liquid is pressurized can reach a relatively high level, and it is convenient for the knapsack sprayer 1 to spray relatively viscous liquids or achieve a relatively long spray distance, thereby satisfying various working conditions and ensuring good performance and convenient usage of the knapsack sprayer 1. The electric motor 151 can be adapted to the plunger pump.

The voltage of the battery pack 154 is greater than or equal to 36 V. In some examples, the voltage of the battery pack 154 is greater than or equal to 40 V. In some examples, the voltage of the battery pack 154 is greater than or equal to 42 V. In some examples, the voltage of the battery pack 154 is greater than or equal to 46 V. In some examples, the voltage of the battery pack 154 is greater than or equal to 56 V. In some examples, the voltage of the battery pack 154 is greater than or equal to 36 V and less than or equal to 66 V. The battery pack 154 has a relatively high voltage and a long battery life and can satisfy the battery life requirements of the electric motor 151 with relatively high power.

The pump 170 draws the liquid from the liquid reservoir 110 and sends the liquid to the nozzle 141 for spraying. The maximum spray distance of the nozzle 141 is greater than or equal to 2 m and less than or equal to 6 m. In some examples, the maximum spray distance of the nozzle 141 is greater than or equal to 2.5 m and less than or equal to 5.5 m. In some examples, the maximum spray distance of the nozzle 141 is greater than or equal to 3 m and less than or equal to 5 m. In some examples, the maximum spray distance of the nozzle 141 is greater than or equal to 3.5 m and less than or equal to 4.5 m. In some examples, the maximum spray distance of the nozzle 141 is greater than or equal to 4 m. In addition to spraying mist, the nozzle 141 can also spray a water jet. The maximum spray distance of the nozzle 141 is greater than or equal to 6 m. In some examples, the maximum spray distance of the nozzle 141 is greater than or equal to 7 m. In some examples, the maximum spray distance of the nozzle 141 is greater than or equal to 8 m. In some examples, the maximum spray distance of the nozzle 141 is greater than or equal to 6 m and less than or equal to 10 m. The pump 170 is a plunger pump, the maximum spray distance of the nozzle 141 is relatively large, the knapsack sprayer 1 can operate on plants farther away from the user, and the knapsack sprayer 1 has good performance and is convenient to use.

The overall length of the pump 170 is greater than or equal to 100 mm and less than or equal to 150 mm. In some examples, the overall length of the pump 170 is greater than or equal to 110 mm and less than or equal to 140 mm. In this manner, the pump 170 has a compact structure. The knapsack sprayer 1 has good spraying performance and a compact structure.

The material of the pump 170 includes a corrosion-resistant material. In this example, the material of the pump 170 includes ceramics. In some examples, the material of the pump 170 may also include stainless steel, ruby, plastic, and the like.

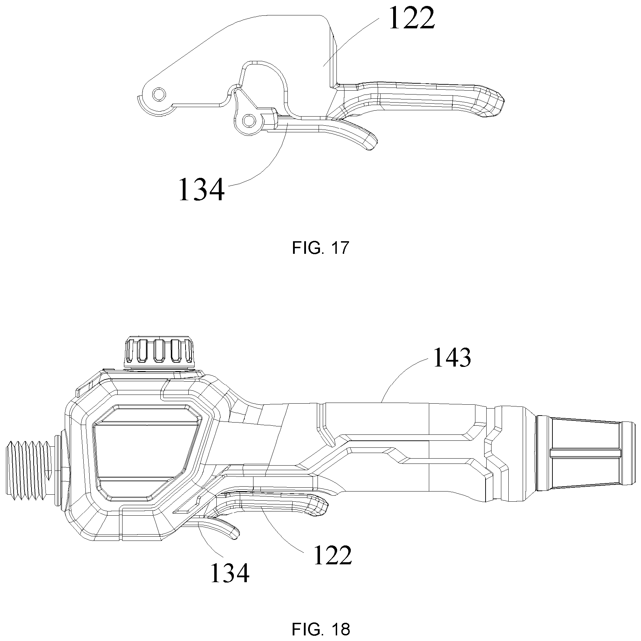

As shown in FIGS. 17 and 18, in some examples, the length of the second operating member 122 is less than half of the length of the operating device 142. In the up and down direction, the projection of the second operating member 122 and the projection of the grip 143 do not overlap. The second operating member 122 is relatively short, thereby making it convenient for the user to hold the operating device 142 and operate the second operating member 122.

The technical effects that the knapsack sprayer in the present application can achieve include at least being convenient and quick to use, usage smoothness, and good spraying performance.

The basic principles, main features, and advantages of this application are shown and described above. It is to be understood by those skilled in the art that the aforementioned examples do not limit the present application in any form, and all technical solutions obtained through equivalent substitutions or equivalent transformations fall within the scope of the present application.

## Claims

1. A knapsack sprayer (1), comprising:
a liquid reservoir (110) configured to store liquid;
a nozzle (141) configured to spray the liquid;
an operating device (142) connected to the liquid reservoir and the nozzle and configured to be held by a user to control a spraying direction of the nozzle; and
a power unit (150) powered by a battery pack (154) and comprising an electric motor (151) and a pump, wherein the electric motor drives the pump to draw the liquid from the liquid reservoir;
wherein the operating device is provided with a first operating member (120) for allowing the electric motor to start or prohibiting the electric motor from starting, and the first operating member is configured to be operated by the user to adjust a rotational speed of the electric motor.

2. The knapsack sprayer of claim 1, wherein the operating device is further provided with a second operating member (122), and the knapsack sprayer further comprises a control device (160) configured to start the electric motor when both the first operating member and the second operating member allow the electric motor to start and control the rotational speed of the electric motor based on a setting of the first operating member.

3. The knapsack sprayer of claim 1, wherein the first operating member is disposed at an end of the operating device facing away from the liquid reservoir.

4. The knapsack sprayer of claim 1, wherein the first operating member is configured to be a knob operated by the user to rotate about a first axis.

5. The knapsack sprayer of claim 2, wherein the control device comprises a circuit board assembly (161) disposed on a side of the pump facing the battery pack.

6. The knapsack sprayer of claim 2, further comprising a valve (137), wherein the valve is in fluid communication with the pump and has a closed state in which the liquid is prevented from passing through the valve and an open state in which the liquid is allowed to pass through the valve; and the second operating member is configured to be operated by the user to switch from a state in which the electric motor is prohibited from starting to a state in which the electric motor is allowed to start and then be operated by the user to switch the valve from the closed state to the open state.

7. The knapsack sprayer of claim 6, further comprising a switch, wherein the second operating member pivots about a first pivot axis (102) along a first pivot direction to trigger the switch, and when the switch is triggered, the second operating member allows the electric motor to start.

8. The knapsack sprayer of claim 7, wherein a distance between the valve and the first pivot axis is less than a distance between the switch and the first pivot axis.

9. The knapsack sprayer of claim 7, further comprising a rod (130), wherein the rod is driven by the second operating member to pivot about a second pivot axis (103) along a second pivot direction to trigger the switch, and the second pivot direction is opposite to the first pivot direction.

10. The knapsack sprayer of claim 2, wherein the second operating member is of a push type.

11. The knapsack sprayer of claim 1, wherein a voltage of the battery pack is greater than or equal to 36 V.

12. The knapsack sprayer of claim 1, wherein the electric motor is a brushless motor.

13. The knapsack sprayer of claim 12, wherein the brushless motor drives the pump to draw the liquid from the liquid reservoir and send the liquid to the nozzle for spraying, and a maximum spray distance of the nozzle is greater than or equal to 6 m.

14. The knapsack sprayer of claim 1, wherein the pump comprises a water inlet (171) and a water outlet, and maximum pressure that the water outlet is capable of withstanding is greater than or equal to 120 Psi.

15. The knapsack sprayer of claim 14, wherein the pump is a plunger pump.
